# EUROPEAN PATENT SPECIFICATION

(11) **EP 2 999 129 B1**
(45) Date of publication and mention of the grant of the patent: **13.11.2019**
(21) Application number: 14892371.7
(22) Date of filing: 20.05.2014
(51) Int. Cl.: G06F 3/01, H04B 5/00

(54) **METHOD FOR GESTURES OPERATING SMART WEARABLE DEVICE AND SMART WEARABLE DEVICE**
VERFAHREN ZUR GESTENBEDIENUNG EINER INTELLIGENTEN TRAGBAREN VORRICHTUNG UND INTELLIGENTE TRAGBARE VORRICHTUNG
PROCÉDÉ DE COMMANDE DE DISPOSITIF PORTABLE INTELLIGENT AU MOYEN DE GESTES, ET DISPOSITIF PORTABLE INTELLIGENT

(43) Date of publication of application: 23.03.2016
(60) Divisional application: 19192469.5
(73) Proprietor: Huawei Technologies Co. Ltd., Shenzhen, Guangdong 518129 (CN)
(72) Inventor: YANG, Xuqiao, Shenzhen Guangdong 518129 (CN); CHEN, Xi, Shenzhen Guangdong 518129 (CN)
(74) Representative: Goddar, Heinz J.
(86) International application number: PCT/CN2014/077873
(87) International publication number: WO 2015/176228

(56) References cited:
- WO-A1-2014/052895
- WO-A2-2013/130202
- CN-A- 102 299 990
- CN-A- 103 442 129
- CN-A- 103 645 804
- CN-A- 103 793 055
- US-A1- 2013 191 741

## Description

### TECHNICAL FIELD

The present invention relates to an operation technology for an intelligent wearing device, and in particular, to a method for performing an operation on an intelligent wearing device by using a gesture, and an intelligent wearing device.

### BACKGROUND

With development of intelligent wearing devices, the intelligent wearing devices, particularly represented by a smart band and an intelligent wristwatch, start to gain popularity in every aspect of life. When an intelligent wearing device is used, a message transferred by a mobile phone, including information such as a phone call, a short messaging service message, or wake-up, may be acquired by using the intelligent wearing device. A user pushes a message by performing an operation on a surface of the intelligent wearing device, to implement interaction with the mobile phone.

With development of technologies, there are increasing applications for intelligent wearing. Although an application (Application, APP for short) vendor performs APP adaptation exclusively for a mobile wearing device, to optimize operation experience, because a screen that is of a general intelligent wearing device and is used for a user operation is relatively small, it is difficult for a user to accurately perform an operation on the intelligent wearing device by using a finger on such a small screen.

US2013191741 A1 discloses an electronic device, which can be a wearable electronic device, tablet electronic device, or other type of device, and which includes a user interface operable to detect gesture input. A visible output, which can be proximately disposed with the user interface, provides visible feedback with which a user can determine that the input was received. A control circuit is operable in some embodiments to control the output of the visible output to mimic the gesture input. Audible feedback and tactile feedback can be used in addition to the visible feedback.
WO2014/052895 A1 describes a locking/unlocking mechanism for a contactless gesture detection system wherein the system is activated by a swipe movement across a graphical user interface.

### SUMMARY

Embodiments of the present invention provide a method for performing an operation on an intelligent wearing device by using a gesture, and an intelligent wearing device, so as to implement accuracy of performing, by a user, an operation on the intelligent wearing device.

The invention is set out in the independent claims whereas preferred embodiments are outlined in the dependent claims.

### BRIEF DESCRIPTION OF DRAWINGS

The invention is defined by the appended claims. In the following, embodiments not falling within the scope of the claims should be understood as examples useful to understand the invention.

To describe the technical solutions in the embodiments of the present invention or in the prior art more clearly, the following briefly introduces the accompanying drawings required for describing the embodiments or the prior art. Apparently, the accompanying drawings in the following description show some embodiments of the present invention, and persons of ordinary skill in the art may still derive other drawings from these accompanying drawings without creative efforts.
FIG. 1 is a flowchart of a method for performing an operation on an intelligent wearing device by using a gesture according to an embodiment of the present invention;
FIG. 2 is a reflected signal of an operation gesture of momentarily passing over a screen of an intelligent wearing device;
FIG. 3 is a reflected signal of an operation gesture of ephemerally hovering over a screen of an intelligent wearing device;
FIG. 4 is an infra-red signal of an operation gesture of momentarily passing over a screen of an intelligent wearing device;
FIG. 5 is an infra-red signal of an operation gesture of ephemerally hovering over a screen of an intelligent wearing device;
FIG. 6 is a schematic structural diagram of an intelligent wearing device according to an embodiment of the present invention;
FIG. 7 is a schematic structural diagram of an intelligent wearing device according to another embodiment of the present invention;
FIG. 8 is a schematic structural diagram of an intelligent wearing device according to still another embodiment of the present invention; and
FIG. 9 is a schematic structural diagram of an intelligent wearing device according to yet another embodiment of the present invention.

### DETAILED DESCRIPTION OF THE EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by persons of ordinary skill in the art based on the embodiments of the present invention without creative efforts shall fall within the protection scope of the present invention.

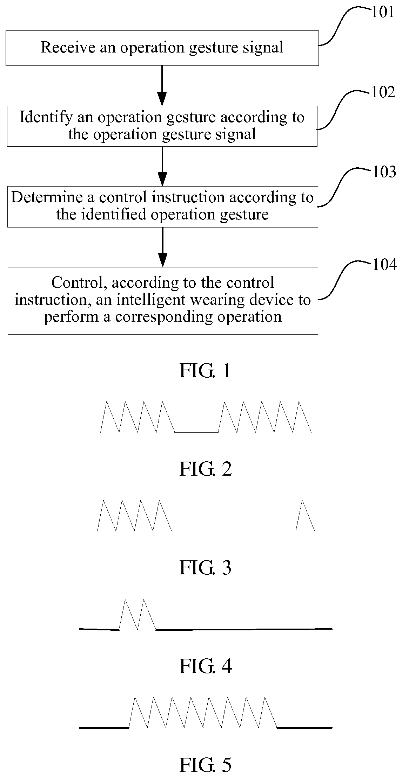

FIG. 1 is a flowchart of a method for performing an operation on an intelligent wearing device by using a gesture according to an embodiment of the present invention. As shown in FIG. 1, the method includes:
Step 101: Receive an operation gesture signal.

Optionally, in an embodiment of the present invention, the intelligent wearing device has a capability of transmitting an infra-red signal. Before the intelligent wearing device receives the operation gesture signal, an infra-red transmitter in the intelligent wearing device transmits an infra-red signal, where the infra-red transmitter may be an infra-red light emitting diode (Infra-Red Light Emitting Diode, IR LED for short). After shielding a screen of the intelligent wearing device, an operation gesture of a user reflects the infra-red signal transmitted by the intelligent wearing device, which may be specifically that the operation gesture of the user reflects the infra-red signal transmitted by the IR LED. Then, the intelligent wearing device receives a reflected signal of the infra-red signal, which may be specifically that a proximity sensor (Proximity Sensor, Prox Sensor for short) in the intelligent wearing device receives the reflected signal that is of the infra-red signal and is transmitted by the IR LED, where the reflected signal of the infra-red signal is the operation gesture signal.

Optionally, in another embodiment of the present invention, the intelligent wearing device has a capability of sensing an external infra-red signal. That the intelligent wearing device receives the operation gesture signal is specifically as follows: When the operation gesture of the user shields the screen of the intelligent wearing device, an infra-red sensing component in the intelligent wearing device may sense an infra-red signal transmitted by the operation gesture, thereby acquiring the infra-red signal transmitted by the operation gesture of the user, where the infra-red signal transmitted by the operation gesture of the user is the operation gesture signal.

Step 102: Identify an operation gesture according to the operation gesture signal.

Optionally, in an embodiment of the present invention, the operation gesture signal is a reflected signal reflected by the operation gesture to the infra-red signal transmitted by the intelligent wearing device due to shielding of the screen of the intelligent wearing device by the operation gesture of the user.

Specifically, after receiving the reflected signal of the infra-red signal, the intelligent wearing device first converts the received reflected signal into a digital signal. Reflected signals reflected by different operation gestures to the infra-red signal are different; therefore, digital signals obtained by converting the different reflected signals are also different. For example, FIG. 2 shows a reflected signal of an operation gesture of momentarily passing over a screen of an intelligent wearing device, and FIG. 3 shows a reflected signal of an operation gesture of ephemerally hovering over a screen of an intelligent wearing device. When the operation gesture is momentarily passing over the screen of the intelligent wearing device, in this case, hover time of the operation gesture is quite short compared with that of the operation gesture of ephemerally hovering over the screen of the intelligent wearing device. In this case, a reflected value that is of the infra-red signal and is generated by the operation gesture is smaller; therefore, time for which a reflected signal is located at a valley in a waveform of the reflected signal is shorter.

Optionally, in another embodiment of the present invention, the operation gesture signal is the infra-red signal transmitted by the operation gesture of the user.

Specifically, after the intelligent wearing device receives the sensed infra-red signal transmitted by the operation gesture of the user, infra-red signals transmitted by different operation gestures are different; therefore, the infra-red signals received by the intelligent wearing device are also different. For example, FIG. 4 shows an infra-red signal of an operation gesture of momentarily passing over a screen of an intelligent wearing device, and FIG. 5 shows an infra-red signal of an operation gesture of ephemerally hovering over a screen of an intelligent wearing device. When the operation gesture is momentarily passing over the screen of the intelligent wearing device, in this case, hover time of the operation gesture is quite short compared with that of the operation gesture of ephemerally hovering over the screen of the intelligent wearing device. In this case, a value that is of the infra-red signal and is generated by the operation gesture is smaller; therefore, time for which the infra-red signal is located at a crest in a waveform of the infra-red signal is shorter.

The operation gesture may be specifically momentarily passing over the screen of the intelligent wearing device, ephemerally hovering over the screen of the intelligent wearing device, or the like, where the operation gesture is not limited in the present invention.

Further, the intelligent wearing device converts the operation gesture signal into a digital signal that can be processed by the intelligent wearing device, determines whether the digital signal after conversion is a preset digital signal in the intelligent wearing device, and if the digital signal after conversion is the preset digital signal, the operation gesture of the user can be identified according to the preset digital signal.

The preset digital signal is a digital signal that is corresponding to the operation gesture of the user and that is prestored in the intelligent wearing device in advance.

For example, Table 1 shows a correspondence between a preset digital signal in an intelligent wearing device and an operation gesture.

**Table 1: Table of a correspondence between a preset digital signal in an intelligent wearing device and an operation gesture**

| **Preset digital signal** | **Operation gesture** |
|---|---|
| 111111110011111111 | Momentarily pass over a screen of an intelligent wearing device |
| 111100000000001111 | Hover over a screen of an intelligent wearing device for three seconds |

It is assumed that the intelligent wearing device has a function of transmitting an infra-red signal. When an operation gesture of a user is momentarily passing over the screen of the intelligent wearing device, the intelligent wearing device receives a reflected signal that is of an infra-red signal and is reflected due to shielding of the screen of the intelligent wearing device by the operation gesture of the user, and converts the reflected signal of the infra-red signal into a digital signal, where the digital signal after conversion is 111111110011111111. The intelligent wearing device matches the digital signal obtained after conversion with a preset digital signal, and determines, according to the table of the correspondence between a preset digital signal and an operation gesture, that the operation gesture of the user is momentarily passing over the screen of the intelligent wearing device.

Further, it may be specifically that an infra-red signal is converted into a digital signal by using an analog to digital converter (Analog to Digital Converter, ADC for short).

Step 103: Determine a control instruction according to the identified operation gesture.

Optionally, a preset control instruction corresponding to the operation gesture is determined according to the identified operation gesture, where the control instruction is used to control the intelligent wearing device to perform a corresponding operation.

Step 104: Control, according to the control instruction, the intelligent wearing device to perform a corresponding operation.

Specifically, according to the matched preset digital signal, the operation gesture of the user is identified, and the control instruction corresponding to the identified operation gesture of the user is determined, where the control instruction is used to control the intelligent wearing device to perform the corresponding operation. For example, when the intelligent wearing device needs to perform an operation of answering or hanging up a call, when the operation gesture of the user is momentarily passing over the intelligent wearing device, the operation of answering a call is performed, and when the operation gesture of the user is ephemerally hovering over the intelligent wearing device, the operation of hanging up a call is performed, where time for hovering over the intelligent wearing device may be set according to a user preference, the control instruction is not limited to answering a call or hanging up a call, and a control instruction may also be increased according to a user requirement.

Further, the control instruction is prestored in the intelligent wearing device in advance and is corresponding to the operation gesture.

Controlling the intelligent wearing device to perform the corresponding operation may be specifically answering a call, hanging up a call, switching a clock, switching a calendar, performing an operation on a mobile phone application, or the like, which is not limited in the present invention.

For example, the following table shows a correspondence of a preset digital signal in an intelligent wearing device, an operation gesture, and a control instruction.

| **Preset digital signal** | **Operation gesture** | **Control instruction** |
|---|---|---|
| 111111110011111111 | Momentarily pass over a screen of an intelligent wearing device | Answer a call |
| 111100000000001111 | Hover over a screen of an intelligent wearing device for three seconds | Hang up a call |

It is assumed that the intelligent wearing device needs to perform an operation of hanging up a call, and the intelligent wearing device has a capability of transmitting an infra-red signal. Specifically, after a mobile terminal of a user has an incoming call, the mobile terminal activates the intelligent wearing device by using Bluetooth, and after the intelligent wearing device receives an activation signal, the screen of the intelligent wearing device is lighted up and an incoming call interface is displayed on the screen of the intelligent wearing device. Meanwhile, a Prox Sensor and an IR LED in the intelligent wearing device are also activated, and the IR LED autonomously transmits an infra-red signal. When the operation gesture of the user is hovering over the screen of the intelligent wearing device for three seconds, in this case, the Prox Sensor receives a reflected signal reflected by the operation gesture of the user to the infra-red signal due to shielding of the screen of the intelligent wearing device by the operation gesture of the user, and the intelligent wearing device converts the received reflected signal of the infra-red signal into a digital signal, where the digital signal obtained by converting the reflected signal of the infra-red signal is 111100000000001111. The intelligent wearing device matches the digital signal obtained after conversion with a preset digital signal, determines, according to the correspondence between a preset digital signal and an operation gesture, that the operation gesture of the user is hovering over the screen of the intelligent wearing device for three seconds, and outputs, according to the determined operation gesture of the user, a control instruction corresponding to the operation gesture of the user, that is, performs an operation of hanging up a call.

Optionally, when the intelligent wearing device is configured to perform a corresponding operation of the mobile terminal, before the intelligent wearing device transmits an infra-red signal or senses an infra-red signal, the activation signal sent by the mobile terminal may further be received by using Bluetooth.

The activation signal may be used to activate the intelligent wearing device to display an operation that needs to be performed by the mobile terminal.

After receiving, by using Bluetooth, the activation signal sent by the mobile terminal, the intelligent wearing device may further display an operation interface on the screen.

Specifically, in an embodiment of the present invention, the intelligent wearing device may be activated in an event triggering manner, that is, when the mobile terminal needs to perform an operation, the mobile terminal transmits the activation signal to the intelligent wearing device by using Bluetooth. Specifically, the activation signal may be used to activate the intelligent wearing device, so as to light up the screen of the intelligent wearing device and display the operation interface on the screen of the intelligent wearing device.

In another embodiment of the present invention, the intelligent wearing device may be activated according to a time period preset by the mobile terminal. For example, when the mobile terminal presets a period for activating the intelligent wearing device to five minutes, in this case, regardless of whether the mobile terminal needs to perform an operation within the period, the mobile terminal transmits, within each period, an activation signal to the mobile terminal by using Bluetooth. When the mobile terminal does not need to perform an operation, the activation signal may be used to activate the intelligent wearing device, so as to light up the screen of the intelligent wearing device; when the mobile terminal needs to perform an operation, the activation signal may be used to activate the intelligent wearing device, so as to light up the screen of the intelligent wearing device and display the operation interface on the screen of the intelligent wearing device. A manner used to activate the intelligent wearing device is not limited to the two types, where the manner of activating the intelligent wearing device is not limited in the present invention.

According to the method for performing an operation on an intelligent wearing device by using a gesture provided in this embodiment of the present invention, first, an operation gesture is identified according to an operation gesture signal; then, a control instruction is determined according to the identified operation gesture; and finally, the intelligent wearing device is controlled, according to the control instruction, to perform a corresponding operation. The intelligent wearing device is controlled, according to an operation gesture of a user, to perform a corresponding operation, which ensures accuracy of performing, by the user, the operation on the intelligent wearing device.

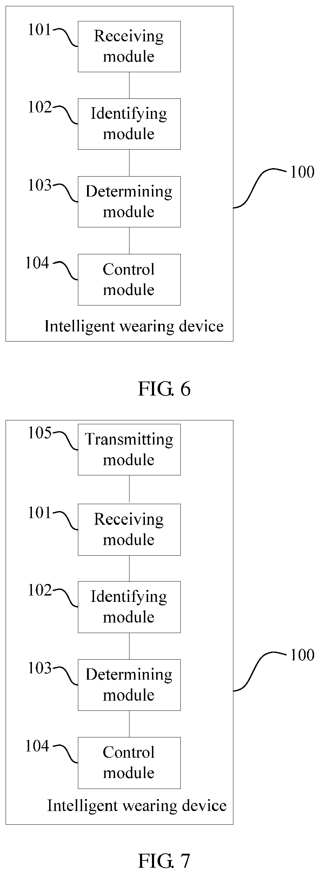

FIG. 6 is a schematic structural diagram of an intelligent wearing device according to an embodiment of the present invention. As shown in FIG. 6, the intelligent wearing device 100 includes a receiving module 101, an identifying module 102, a determining module 103, and a control module 104.

The receiving module 101 is configured to receive an operation gesture signal.

The identifying module 102 is configured to identify an operation gesture according to the operation gesture signal received by the receiving module 101.

The determining module 103 is configured to determine a control instruction according to the operation gesture identified by the identifying module 102.

The control module 104 is configured to control, according to the control instruction determined by the determining module 103, the intelligent wearing device to perform a corresponding operation.

In addition, as shown in FIG. 7, for the intelligent wearing device 100, the intelligent wearing device 100 may further include a transmitting module 105, configured to: before the receiving module 101 receives the operation gesture signal, transmit an infra-red signal.

Further, the receiving module 101 is specifically configured to:
receive a reflected signal reflected by the operation gesture to the infra-red signal.

Optionally, the receiving module 101 is specifically configured to:
receive an infra-red signal transmitted by the operation gesture.

Further, the identifying module 102 is specifically configured to:
perform, by the identifying module 102, analog-to-digital conversion on the operation gesture signal to obtain a digital signal;
determine, by the identifying module 102, whether the digital signal is a preset digital signal; and
if the digital signal is the preset digital signal, determine, by the identifying module 102, the operation gesture according to the preset digital signal.

The intelligent wearing device 100 provided in this embodiment may be configured to execute the technical solution in the method embodiment shown in FIG. 1. Implementation principles and technical effects of the intelligent wearing device 100 are similar, and details are not described again.

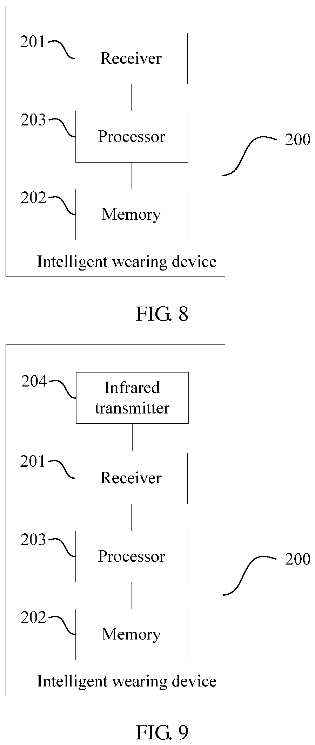

FIG. 8 is a schematic structural diagram of an intelligent wearing device according to still another embodiment of the present invention. As shown in FIG. 8, the intelligent wearing device 200 includes a receiver 201, a memory 202, and a processor 203.

The receiver 201 is configured to receive an operation gesture signal.

The memory 202 is configured to prestore a correspondence of a digital signal, an operation gesture, and a control instruction.

The processor 203 is configured to identify an operation gesture according to the operation gesture signal.

The processor 203 is further configured to determine, according to the correspondence stored in the memory 202, a control instruction corresponding to the identified operation gesture.

The processor 203 is further configured to control, according to the determined control instruction, the intelligent wearing device to perform a corresponding operation.

In addition, as shown in FIG. 9, for the intelligent wearing device 200, the intelligent wearing device 200 may further include:
an infra-red transmitter 204, configured to: before the receiver 201 receives the operation gesture signal, transmit an infra-red signal.

The receiver 201 is specifically configured to:
receive a reflected signal reflected by the operation gesture to the infra-red signal.

Optionally, the receiver 201 is specifically configured to:
receive an infra-red signal transmitted by the operation gesture.

Further, that the processor 203 is configured to identify an operation gesture according to the operation gesture signal includes:
performing, by the processor 203, analog-to-digital conversion on the operation gesture signal to obtain a digital signal;
determining, by the processor 203 according to the correspondence stored in the memory 202, whether the digital signal is a preset digital signal; and
if the digital signal is the preset digital signal, determining, by the processor 203, the operation gesture according to the preset digital signal.

The intelligent wearing device 200 provided in this embodiment may be configured to execute the technical solution in the method embodiment shown in FIG. 1. Implementation principles and technical effects of the intelligent wearing device 200 are similar, and details are not described again.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The storage medium includes any medium that can store program code, such as a ROM, a RAM, a magnetic disk, or an optical disc.

Finally, it should be noted that the embodiments are merely intended for describing the technical solutions of the present invention, but not for limiting the present invention. Although the present invention is described in detail with reference to the embodiments, persons of ordinary skill in the art should understand that they may still make modifications to the technical solutions described in the embodiments or make equivalent replacements to some or all technical features thereof, without departing from the scope of the technical solutions of the embodiments of the present invention.

## Claims

1. A method for performing an operation on an intelligent wearable device by using a gesture, wherein the method is applied to the intelligent wearable device, and the method comprises:
receiving an activation signal from a mobile terminal;
displaying an operation interface on a screen of the intelligent wearable device in response to the activation signal;
transmitting an infra-red signal in response to the activation signal; and
receiving (101) a reflected signal reflected by an operation gesture to the infra-red signal;
identifying (102) the operation gesture according to the reflected signal;
determining (103) a control instruction according to the identified operation gesture; and
controlling (104), according to the control instruction, the intelligent wearable device to perform a corresponding operation.

2. The method according to claim 1, wherein the identifying an operation gesture according to the operation gesture signal specifically comprises:
performing analog-to-digital conversion on the operation gesture signal to obtain a digital signal;
determining whether the digital signal is a preset digital signal; and
if the digital signal is the preset digital signal, determining the operation gesture according to the preset digital signal.

3. An intelligent wearable device, comprising:
means for receiving an activation signal from a mobile terminal;
a screen configured for displaying an operation interface in response to the activation signal;
a transmitting module (105) configured to be activated in response to the activation signal to transmit an infra-red signal;
a receiving module (101), configured to receive a reflected infra-red signal reflected by an operation gesture to the infra-red signal;
an identifying module (102), configured to identify the operation gesture according to the reflected signal received by the receiving module (101);
a determining module (103), configured to determine a control instruction according to the operation gesture identified by the identifying module (102); and
a control module (104), configured to control, according to the control instruction determined by the determining module (103), the intelligent wearable device to perform a corresponding operation.

4. The intelligent wearable device according to claim 3, wherein the identifying module (102) is specifically configured to:
perform analog-to-digital conversion on the operation gesture signal to obtain a digital signal;
determine whether the digital signal is a preset digital signal; and
if the digital signal is the preset digital signal, determine the operation gesture according to the preset digital signal.

## Patentansprüche

1. Verfahren zum Durchführen einer Operation an einer intelligenten tragbaren Vorrichtung durch Verwendung einer Geste, wobei das Verfahren auf die intelligente tragbare Vorrichtung angewendet wird und das Verfahren umfasst:
Empfangen eines Aktivierungssignals von einem mobilen Endgerät;
Anzeigen einer Operations schnittstelle auf einem Bildschirm der intelligenten tragbaren Vorrichtung in Reaktion auf das Aktivierungssignal;
Übertragen eines Infrarotsignals in Reaktion auf das Aktivierungssignal; und
Empfangen (101) eines reflektierten Signals, das durch eine Operationsgeste auf das Infrarotsignal reflektiert wird;
Identifizieren (102) der Operationsgeste gemäß dem reflektierten Signal;
Ermitteln (103) einer Steueranweisung gemäß der identifizierten Operationsgeste; und
Steuern (104) der intelligenten tragbaren Vorrichtung gemäß der Steueranweisung, um eine entsprechende Operation durchzuführen.

2. Verfahren nach Anspruch 1, wobei das Identifizieren einer Operationsgeste gemäß dem Operationsgestensignal speziell umfasst:
Durchführen von Analog-zu-Digital-Konvertierung mit der Operationsgeste, um ein digitales Signal zu erhalten;
Ermitteln, ob das digitale Signal ein vorgegebenes digitales Signal ist; und
falls das digitale Signal das vorgegebene digitale Signal ist, Ermitteln der Operationsgeste gemäß dem vorgegebenen digitalen Signal.

3. Intelligente tragbare Vorrichtung, umfassend:
Mittel zum Empfangen eines Aktivierungssignals von einem mobilen Endgerät;
einen Bildschirm, der konfiguriert ist, um in Reaktion auf das Aktivierungssignal eine Operationsschnittstelle anzuzeigen;
ein Sendemodul (105), das konfiguriert ist, um in Reaktion auf das Aktivierungssignal aktiviert zu werden, um ein Infrarotsignal zu übertragen;
ein Empfangsmodul (101), das konfiguriert ist, um ein reflektiertes Infrarotsignal zu empfangen, das durch eine Operationsgeste auf das Infrarotsignal reflektiert wird;
ein Identifizierungsmodul (102), das konfiguriert ist, um die Operationsgeste gemäß dem reflektierten Signal zu identifizieren, das von dem Empfangsmodul (101) empfangen wurde;
ein Ermittlungsmodul (103), das konfiguriert ist, um eine Steueranweisung gemäß der Operationsgeste zu ermitteln, die durch das Identifizierungsmodul (102) identifiziert wurde; und
ein Steuermodul (104), das konfiguriert ist, um gemäß der Steueranweisung, die durch das Ermittlungsmodul (103) ermittelt wurde, die intelligente tragbare Vorrichtung zu steuern, um eine entsprechende Operation durchzuführen.

4. Intelligente tragbare Vorrichtung nach Anspruch 3, wobei das Identifizierungsmodul (102) speziell konfiguriert ist zum:
Durchführen von Analog-zu-Digital-Konvertierung mit dem Operationsgestensignal, um ein digitales Signal zu erhalten;
Ermitteln, ob das digitale Signal ein vorgegebenes digitales Signal ist; und
falls das digitale Signal das vorgegebene digitale Signal ist, Ermitteln der Operationsgeste gemäß dem vorgegebenen digitalen Signal.

## Revendications

1. Procédé de réalisation d'une opération sur un dispositif portable intelligent au moyen d'un geste, le procédé étant appliqué au dispositif portable intelligent, et le procédé consistant à :
recevoir un signal d'activation en provenance d'un terminal mobile ;
afficher une interface d'opérations sur un écran du dispositif portable intelligent en réponse au signal d'activation ;
transmettre un signal infrarouge en réponse au signal d'activation ; et
recevoir (101) un signal réfléchi qui est réfléchi par un geste d'opération au signal infrarouge ;
identifier (102) le geste d'opération selon le signal réfléchi ;
déterminer (103) une instruction de contrôle selon le geste d'opération identifié ; et
contrôler (104), selon l'instruction de contrôle, le dispositif portable intelligent pour qu'il réalise une opération correspondante.

2. Procédé selon la revendication 1, dans lequel l'identification d'un geste d'opération selon le signal de geste d'opération consiste spécifiquement à :
réaliser une conversion analogique-numérique sur le signal de geste d'opération pour obtenir un signal numérique ;
déterminer si le signal numérique est un signal numérique prédéfini ; et
si le signal numérique est le signal numérique prédéfini, déterminer le geste d'opération selon le signal numérique prédéfini.

3. Dispositif portable intelligent, comprenant :
un moyen permettant de recevoir un signal d'activation en provenance d'un terminal mobile ;
un écran configuré pour afficher une interface d'opérations en réponse au signal d'activation ;
un module de transmission (105), configuré pour être activé en réponse au signal d'activation pour transmettre un signal infrarouge ;
un module de réception (101), configuré pour recevoir un signal infrarouge réfléchi qui est réfléchi par un geste d'opération au signal infrarouge ;
un module d'identification (102), configuré pour identifier le geste d'opération selon le signal réfléchi reçu par le module de réception (101) ;
un module de détermination (103), configuré pour déterminer une instruction de contrôle selon le geste d'opération identifié par le module d'identification (102) ; et
un module de contrôle (104), configuré pour contrôler, selon l'instruction de contrôle déterminée par le module de détermination (103), le dispositif portable intelligent pour qu'il réalise une opération correspondante.

4. Dispositif portable intelligent selon la revendication 3, dans lequel le module d'identification (102) est spécifiquement configuré pour :
réaliser une conversion analogique-numérique sur le signal de geste d'opération pour obtenir un signal numérique ;
déterminer si le signal numérique est un signal numérique prédéfini ; et
si le signal numérique est le signal numérique prédéfini, déterminer le geste d'opération selon le signal numérique prédéfini.
